# EUROPÄISCHE PATENTSCHRIFT

(11) **EP 3 694 674 B1**
(45) Veröffentlichungstag und Bekanntmachung des Hinweises auf die Patenterteilung: **01.12.2021**
(21) Anmeldenummer: 18782069.1
(22) Anmeldetag: 04.10.2018
(51) Int. Cl.: B23K 9/20, B23K 11/00, B23K 9/16

(54) **SCHWEISSVORRICHTUNG**
WELDING DEVICE
DISPOSITIF DE SOUDAGE

(30) Priorität: 10.10.2017 EP 17195643
(43) Veröffentlichungstag der Anmeldung: 19.08.2020
(73) Patentinhaber: Hilti Aktiengesellschaft, 9494 Schaan (LI)
(72) Erfinder: ROSENBAUM, Ulrich, 7323 Wangs (CH); WOERNER, Markus, 88138 Hergensweiler (DE); POPP, Uwe, 9443 Widnau (CH)
(74) Vertreter: Hilti Aktiengesellschaft Corporate Intellectual Property
(86) Internationale Anmeldenummer: PCT/EP2018/076988
(87) Internationale Veröffentlichungsnummer: WO 2019/072675

(56) Entgegenhaltungen:
- CN-U- 202 726 248
- JP-A- 2004 314 140
- US-A- 3 790 740
- US-A1- 2008 223 830

## Beschreibung

### Technisches Gebiet

Die Erfindung betrifft allgemein eine Vorrichtung zur Befestigung eines Bolzens an einem Untergrund sowie einen derartigen Bolzen (siehe, z.B., US 3 790 740 A).

### Stand der Technik

Es sind etliche Vorrichtungen und Verfahren bekannt, mit denen verschiedene Bolzen in unterschiedlichen Anwendungsfällen an einem Untergrund befestigt werden. Beispielsweise wird ein Bolzen mit dem Untergrund in Kontakt gebracht und mit elektrischem Strom beaufschlagt. Sobald der elektrische Strom zwischen dem Bolzen und dem Untergrund fliesst, wird der Bolzen unter Ausbildung eines Lichtbogens von dem Untergrund abgehoben. Aufgrund der freiwerdenden Energie verflüssigt sich teilweise das Material des Bolzens und des Untergrunds. Anschliessend wird der elektrische Strom abgeschaltet und der Bolzen in das verflüssigte Material eingetaucht, während dieses Material erkaltet und fest wird. Der Bolzen ist dann stoffschlüssig mit dem Untergrund verbunden.

Um die notwendige Energie für die Verflüssigung des Materials des Bolzens und des Untergrunds in ausreichend kurzer Zeit zur Verfügung zu stellen, sind Vorrichtungen bekannt, welche einen elektrischen Strom mit sehr hoher Stromstärke erzeugen und über ein entsprechend dimensioniertes elektrisches Kabel dem Bolzen zuführen. Um ein Oxidieren des verflüssigten Materials zu vermeiden, ist es bekannt, die Kontaktstelle zwischen dem Bolzen und dem Untergrund mit einem Inertgas zu spülen. Das Inertgas wird dazu in Gasflaschen bereitgestellt, welche zusammen mit den übrigen Komponenten der Befestigungsvorrichtung zu transportieren und während des Befestigungsvorgangs gegen ein Umfallen zu sichern sind.

Bei Anwendungen beispielsweise im Gebäude- oder Schiffsbau werden Bolzen in verschiedenen Grössen mit einem Gewinde verwendet, an welches ein Gegenstand geschraubt wird, um den Gegenstand an dem Untergrund zu befestigen. Einige Parameter des Befestigungsverfahrens wie beispielsweise die Dauer und die elektrische Leistung des elektrischen Stroms sind von einem Anwender an der Vorrichtung einzustellen und an den verwendeten Bolzen anzupassen. Mittels einer Sichtprüfung beurteilt der Anwender schliesslich die Qualität der Verbindung zwischen dem Bolzen und dem Untergrund. Die Verbindungsqualität hängt damit auch von der Erfahrung und den Fähigkeiten des Anwenders ab.

### Darstellung der Erfindung

Aufgabe der Erfindung ist es, eine Vorrichtung zur Verfügung zu stellen, mit welchem eine Befestigung eines Bolzens an einem Untergrund vereinfacht und/oder verbessert wird.

Diese Aufgabe ist bei einer Vorrichtung zum Schweissen eines Schweissbolzens an einen Untergrund, mit einer Schweisspistole, welche ein Gehäuse sowie einen Bolzenhalter für den Schweissbolzen umfasst, mit einem Gasbehälter, und mit einer Gasleitung zur Leitung von Gas aus dem Gasbehälter zu dem Bolzenhalter, dadurch gelöst, dass der Gasbehälter von der Schweisspistole getragen ist.

Eine vorteilhafte Ausführungsform ist dadurch gekennzeichnet, dass die Gasleitung von der Schweisspistole getragen ist. Bevorzugt ist die Gasleitung zumindest teilweise in dem Gehäuse angeordnet. Besonders bevorzugt ist die Gasleitung vollständig in dem Gehäuse angeordnet.

Eine vorteilhafte Ausführungsform ist dadurch gekennzeichnet, dass die Schweisspistole eine Gasbehälteraufnahme zur Aufnahme des Gasbehälters aufweist. Bevorzugt weist die Gasleitung ein an der Gasbehälteraufnahme angeordnetes Gasanschlusselement auf.

Eine vorteilhafte Ausführungsform ist dadurch gekennzeichnet, dass die Vorrichtung eine Gasdurchfluss-Regeleinrichtung für eine Regelung eines Gasdurchflusses durch die Gasleitung aufweist. Bevorzugt ist die Gasdurchfluss-Regeleinrichtung zumindest teilweise in dem Gehäuse angeordnet. Besonders bevorzugt ist die Gasdurchfluss-Regeleinrichtung vollständig in dem Gehäuse angeordnet.

Eine vorteilhafte Ausführungsform ist dadurch gekennzeichnet, dass die Vorrichtung ein Schweissgerät, ein erstes elektrisches Kabel zur Leitung von Schweissstrom von dem Schweissgerät zu der Schweisspistole und ein zweites elektrisches Kabel zur Leitung des Schweissstroms von dem Untergrund zu dem Schweissgerät aufweist.

Eine vorteilhafte Ausführungsform ist dadurch gekennzeichnet, dass die Vorrichtung eine Füllstands-Detektionseinrichtung für den Gasbehälter aufweist, welche von der Schweisspistole getragen ist. Bevorzugt umfasst die Füllstands-Detektionseinrichtung einen Drucksensor zur Messung des Innendrucks des Gasbehälters. Ebenfalls bevorzugt umfasst die Füllstands-Detektionseinrichtung eine Datenverarbeitungseinrichtung, welche die Anzahl von erfolgten Schweissungen detektiert. Ebenfalls bevorzugt umfasst die Füllstands-Detektionseinrichtung ein Speichermedium, welches an dem Gasbehälter angebracht ist, und eine Datenverarbeitungseinrichtung, welche von der Schweisspistole getragen und dafür geeignet ist, Informationen über einen Füllstand des Gasbehälters auf dem Speichermedium abzuspeichern oder von dem Speicher auszulesen. Ebenfalls bevorzugt umfasst die Füllstands-Detektionseinrichtung eine Anzeigeeinheit, welche einen von der Füllstands-Detektionseinrichtung detektierten Füllstand des Gasbehälters anzeigt.

### Ausführungsbeispiele

Die Erfindung wird nachstehend anhand von Ausführungsbeispielen unter Bezugnahme auf die Zeichnungen näher erläutert. Es zeigen:
Fig. 1 schematisch eine Schweissvorrichtung und
Fig. 2 schematisch eine Schweisspistole.

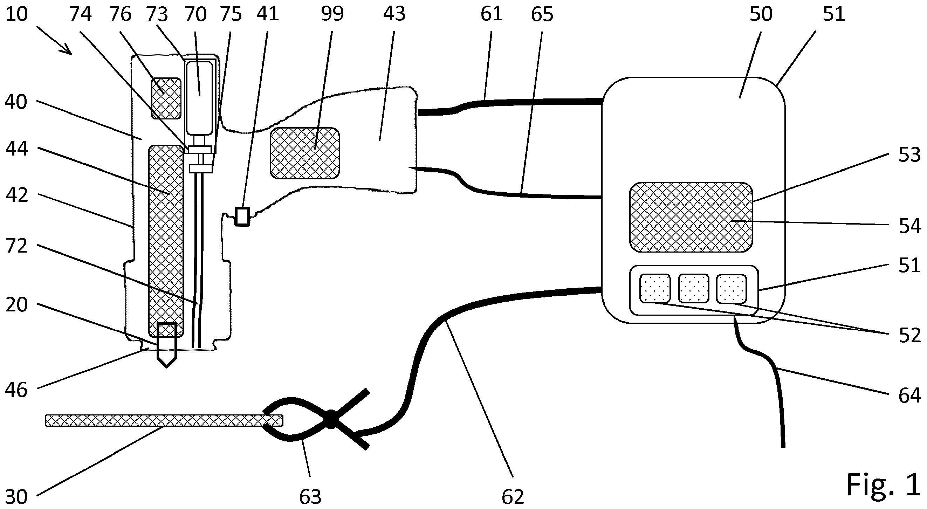

In Fig. 1 ist eine Schweissvorrichtung 10 zum Schweissen eines Schweissbolzens 20 an einen Untergrund 30 schematisch dargestellt. Ein Material des Schweissbolzens 20 und ein Material des Untergrunds 30 sind elektrisch leitfähig, insbesondere metallisch. Die Schweissvorrichtung 10 umfasst eine Schweisspistole 40 mit einem als Tastschalter ausgebildeten Auslöseschalter 41, ein Schweissgerät 50 mit einem Gehäuse 51, ein erstes elektrisches Kabel 61, ein zweites elektrisches Kabel 62 mit einer Anschlussklemme 63, ein beispielsweise als Netzkabel ausgebildetes elektrisches Versorgungskabel 64, eine elektrische Kommunikationsleitung 65, einen als Gasdose oder Gasflasche ausgebildeten Gasbehälter 70 und eine als Gasschlauch oder Gasrohr ausgebildete Gasleitung 72.

Das erste Kabel 61 dient einer Versorgung des Schweissbolzens 20 mit elektrischem Strom durch das Schweissgerät 50. Das zweite Kabel 62 dient einer elektrischen Verbindung des Untergrunds 30 mit dem Schweissgerät 50, wenn die Anschlussklemme 63 an den Untergrund 30 geklemmt ist. Bei Berührung des Schweissbolzens 20 mit dem Untergrund 30 schliesst sich ein Stromkreis, so dass der Schweissbolzen 20 von dem Schweissgerät 50 mit Schweissstrom beaufschlagbar ist, welcher beispielsweise als Gleichstrom oder Wechselstrom ausgebildet ist. Die Schweisspistole 40 umfasst zu diesem Zweck ein in Fig. 1 nicht gezeigtes Schweissstrom-Kontaktelement. Das Schweissgerät 50 umfasst eine nicht gezeigte Einrichtung zur Konvertierung von elektrischem Strom aus dem Versorgungskabel 64 in Schweissstrom, welche beispielsweise einen elektrischen Kondensator, einen Thyristor, einen Bipolar-Transistor mit isolierter Gate-Elektrode oder andere leistungselektronische Bauelemente sowie ein zugehöriges Steuergerät mit einem Mikroprozessor umfasst, um den Schweissstrom mit gewünschter Spannung und Stromstärke bereitzustellen.

Das Schweissgerät 50 weist eine Eingabeeinrichtung 51 mit Betätigungselementen 52 sowie eine Ausgabeeinrichtung 53 mit einem visuellen Anzeigeelement 54 und einer drahtlosen Übertragungseinheit auf. Die Eingabeeinrichtung 51 dient der Eingabe von Parametern eines mit der Schweissvorrichtung 10 durchzuführenden Schweissverfahrens, wie beispielsweise der elektrischen Spannung, Stromstärke, Leistung und zeitliche Dauer des Schweissstroms, Position und Geschwindigkeit des Bolzens und so weiter, durch einen Anwender der Schweissvorrichtung 10. Die Ausgabeeinrichtung 53 dient der Ausgabe von Informationen, wie beispielsweise Informationen über Parameter des Schweissverfahrens, Informationen über erfasste Emissionen des Schweissverfahrens oder andere Grössen, Informationen über eine Güte des Schweissvorgangs, Informationen über Massnahmen zur Verbesserung des Schweissvorgangs, Informationen über erfasste Eigenschaften des Schweissbolzens oder aus den vorgenannten Grössen abgeleitete Informationen, und/oder Empfehlungen oder Anweisungen zur Reinigung und/oder Wartung der Schweissvorrichtung 10, insbesondere der Schweisspistole 40, an den Anwender.

Die Kommunikationsleitung 65 dient einer Kommunikation zwischen der Schweisspistole 40, insbesondere einer Steuerungseinrichtung 99 der Schweisspistole 40, und dem Schweissgerät 50, insbesondere dem Steuergerät und/oder der Eingabeeinrichtung 51 und/oder der Ausgabeeinrichtung 53. Durch diese Kommunikation wird beispielsweise ein Austausch von Informationen über die Parameter eines Schweissvorgangs bewerkstelligt, um beispielsweise eine Synchronisation des Schweissstroms mit einer Bewegung des Schweissbolzens 20 zu erreichen oder zu erleichtern. Bei nicht gezeigten Ausführungsbeispielen geschieht die Kommunikation zwischen der Schweisspistole und dem Schweissgerät drahtlos, per Funk oder mittels des ersten elektrischen Kabels, welches den Schweissstrom führt.

Die Schweisspistole 40 weist ein Gehäuse 42 mit einer Mündung 46 auf, von welchem ein Handgriff 43 mit dem Auslöseschalter 41 abragt. Die Schweisspistole 40 weist ferner einen Bolzenhalter 44 auf, an welchem der Schweissbolzen 20 während eines Schweissvorgangs gehalten ist. Hierzu umfasst der Bolzenhalter beispielsweise zwei, drei, vier oder mehr nicht im einzelnen gezeigte federnde Arme, zwischen die der Schweissbolzen 20 eingesteckt und mittels Klemmsitz gehalten wird. Die Schweisspistole 40 weist ferner ein Schweissstrom-Kontaktelement zur Beaufschlagung des Schweissbolzens 20 mit einem Schweissstrom auf, welches in den Bolzenhalter 44 integriert ist, beispielsweise in Form eines oder mehrerer der federnden Arme.

Die Schweisspistole 40 weist ferner die Steuereinrichtung 99 zum Steuern der verschiedenen Komponenten und Einrichtungen der Schweisspistole und des Schweissgeräts 50 auf. Die Steuereinrichtung 99 ist zum Steuern eines oder mehrerer Parameter des Schweissvorgangs vorgesehen. Die Steuereinrichtung 99 umfasst dazu verschiedene elektronische Bauteile, wie beispielsweise einen oder mehrere Mikroprozessoren, einen oder mehrere temporäre oder dauerhafte Datenspeicher und dergleichen, auf.

Die Schweisspistole 40 weist ferner eine als ein erster Hubmagnet ausgebildete Bolzenabhubeinrichtung auf, welche den Bolzenhalter 44 mit einer Kraft von der Mündung 46 weg nach hinten (in Fig. 1 nach oben) beaufschlagt, wenn die Bolzenabhubeinrichtung aktiviert ist. Über eine nicht gezeigte Signalleitung kommuniziert die Steuereinrichtung 99 mit der Bolzenabhubeinrichtung, um die Bolzenabhubeinrichtung zu steuern, insbesondere zu aktivieren und zu deaktivieren.

Die Schweisspistole 40 weist ferner eine als Federelement oder als ein zweiter Hubmagnet ausgebildete Bolzeneintaucheinrichtung auf, welche den Bolzenhalter 44 mit einer Kraft zu der Mündung 46 hin nach vorne (in Fig. 1 nach unten) beaufschlagt, wenn die Bolzeneintaucheinrichtung aktiviert ist. Über eine nicht gezeigte Signalleitung kommuniziert die Steuereinrichtung 99 mit der Bolzeneintaucheinrichtung, um die Bolzeneintaucheinrichtung zu steuern, insbesondere zu aktivieren und zu deaktivieren. Wenn die Bolzeneintaucheinrichtung als ein Federelement ausgebildet ist, wird dieses Federelement vorzugsweise gespannt, wenn der Bolzenhalter von der Bolzenabhubeinrichtung nach hinten bewegt wird, so dass das Federelement den Bolzenhalter nach vorne bewegt, sobald die Bolzenabhubeinrichtung deaktiviert wird.

Die Gasleitung 72 dient einer Versorgung eines Kontaktbereichs zwischen dem Schweissbolzen 20 und dem Untergrund 30 mit einem Schutzgas aus dem Gasbehälter 70, um den Kontaktbereich während eines Schweissvorgangs vor einer Oxidation durch Sauerstoff einer Umgebung zu schützen. Die Gasleitung 72 leitet das Schutzgas zu dem Bolzenhalter 44, vorzugsweise im Bereich der Mündung 46.

Die Schweisspistole 40 weist eine in dem Gehäuse 42 angeordnete Gasbehälteraufnahme 73 auf, in welcher der Gasbehälter 70 austauschbar aufgenommen ist, so dass der Gasbehälter 70 von der Schweisspistole 40 getragen ist. Die Gasleitung 72 ist vollständig in dem Gehäuse 42 angeordnet und von der Scheisspistole 40 getragen. Die Gasleitung 72 weist ein Gasanschlusselement 74 auf, welches für einen Anschluss des Gasbehälters 70 an die Gasleitung 72 an der Gasbehälteraufnahme 73 angeordnet ist. Weiterhin weist die Schweissvorrichtung 10 und insbesondere die Schweisspistole 40 eine als Ventil, insbesondere Magnetventil, ausgebildete Gasdurchfluss-Regeleinrichtung 75 für eine Regelung eines Gasdurchflusses durch die Gasleitung 72 auf, wobei der Gasdurchfluss beispielsweise dadurch geregelt wird, dass eine Querschnittsfläche der Gasdurchfluss-Regeleinrichtung 75 eingestellt wird, oder dass eine zeitliche Dauer oder Frequenz einer oder mehrerer geöffneter Phasen der Gasdurchfluss-Regeleinrichtung 75 eingestellt wird. Die Regelung des Gasdurchflusses ist dabei vorzugsweise auf die übrigen Parameter des Schweissvorgangs und/oder das Gasvolumen in der Gasleitung 72 abgestimmt.

Die Gasdurchfluss-Regeleinrichtung 75 ist vollständig in dem Gehäuse 42 angeordnet und von der Schweisspistole 40 getragen und dient einer Steuerung eines Gasflusses zu dem Kontaktbereich zwischen dem Schweissbolzen 20 und dem Untergrund 30. Die Gasdurchfluss-Regeleinrichtung 75 umfasst ein regelbares Ventil, welches beispielsweise von der Steuerungseinrichtung 99 geregelt wird. Unter anderem ist die Steuerungseinrichtung 99 dafür vorgesehen, das Ventil während eines vorbestimmten Zeitraums zu öffnen, um die Gasleitung 72 mit Gas aus dem Gasbehälter zu spülen, und einen Schweissvorgang einzuleiten oder einem Benutzer der Schweissvorrichtung 10 die Bereitschaft der Schweissvorrichtung 10 für einen Schweissvorgang zu signalisieren, wenn der vorbestimmte Zeitraum verstrichen ist. Durch die automatisierte Spülung der Gasleitung 72 wird unter Umständen die Wartezeit vor einem Schweissvorgang und/oder der Gasverbrauch reduziert.

Weiterhin weist die Schweissvorrichtung 10 und insbesondere die Schweisspistole 40 eine Füllstands-Detektionseinrichtung 76 für den Gasbehälter 70 auf. Die Füllstands-Detektionseinrichtung 76 ist vorzugsweise vollständig in dem Gehäuse 42 angeordnet und von der Schweisspistole 40 getragen. Die Füllstands-Detektionseinrichtung 76 umfasst einen in der Gasleitung 72, beispielsweise an dem Gasanschlusselement 74 angeordneten Drucksensor zur Messung des Innendrucks des Gasbehälters sowie eine Datenverarbeitungseinrichtung, welche die Anzahl von erfolgten Schweissungen detektiert. Bei nicht gezeigten Ausführungsbeispielen umfasst die Füllstands-Detektionseinrichtung einen Sensor insbesondere zur Messung des Gewichts oder der Trägheit des Gasbehälters, des Druck- oder Temperaturgefälles während einer Regelung des Gasflusses, einer akustischen Antwort des Gasbehälterinhalts oder dergleichen. Zusätzlich oder alternativ umfasst die Füllstands-Detektionseinrichtung 76 ein Speichermedium, welches an dem Gasbehälter 70 angebracht ist, und eine Datenverarbeitungseinrichtung, welche von dem Schweissgerät getragen und dafür geeignet ist, Informationen über einen Füllstand des Gasbehälters 70 auf dem Speichermedium abzuspeichern und/oder von dem Speicher auszulesen und/oder mittels der Ausgabeeinrichtung 53, beispielsweise deren Anzeigeelement 54, auszugeben. Die Informationen über den Füllstand des Gasbehälters 70 umfassen beispielsweise auch einen Hinweis oder eine Aufforderung, den Gasbehälter 70 nachzufüllen oder durch einen befüllten Gasbehälter zu ersetzen. Der Gasbehälter 70 ist beispielsweise als Einweg-Gebinde mit einem maximalen Gasdruck von 180 bar ausgebildet. Eine Füllung reicht beispielsweise für 50 bis 100 Schweissvorgänge.

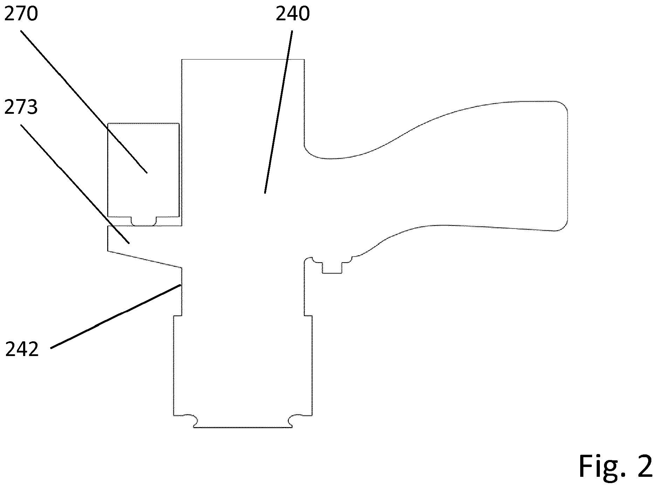

In Fig. 2 ist eine Schweisspistole 240 dargestellt, welche ein Gehäuse 242 und einen Gasbehälter 270 aufweist, welcher aussen an dem Gehäuse 242 angebracht, insbesondere befestigt, ist. Die Schweisspistole umfasst zu diesem Zweck eine Gasbehälteraufnahme 273, welche von dem Gehäuse 242 nach aussen abragt. Die in Fig. 2 nicht näher gezeigte Gasleitung ist ebenfalls aussen an dem Gehäuse 242 angebracht, insbesondere befestigt, oder in dem Gehäuse 242 angeordnet, und von der Schweisspistole 240 getragen. Ansonsten ist die Schweisspistole 240 im Wesentlichen wie die Schweisspistole 40 (Fig. 1) ausgebildet.

Bei einem Schweissverfahren mit der Schweissvorrichtung 10 werden zunächst der Untergrund 30 und der Bolzen 20 zur Verfügung gestellt. In einem weiteren Schritt werden von einem Anwender über die Eingabeeinrichtung Informationen eingegeben, beispielsweise über gewünschte Parameter des folgenden Schweissvorgangs. In einem weiteren Schritt wird der Schweissbolzen 20 von dem Schweissgerät 50 mittels des ersten Kabels 61 und des zweiten Kabels 62 mit einem Schweissstrom zwischen dem Schweissbolzen 20 und dem Untergrund 30 beaufschlagt. In einem weiteren Schritt wird der Schweissbolzen 20 mittels der Bolzenabhubeinrichtung von dem Untergrund unter Beibehaltung des zwischen dem Schweissbolzen 20 und dem Untergrund 30 fliessenden Schweissstroms abgehoben, wobei sich zwischen dem Schweissbolzen 20 und dem Untergrund 30 ein Lichtbogen ausbildet. Insbesondere aufgrund der von dem Lichtbogen erzeugten Hitze wird dann ein Material des Schweissbolzens 20 und/oder des Untergrunds 30 teilweise verflüssigt. In einem weiteren Schritt wird der Schweissbolzen 20 mittels der Bolzeneintaucheinrichtung in das verflüssigte Material des Schweissbolzens 20 beziehungsweise des Untergrunds 30 eingetaucht. Danach erstarrt das verflüssigte Material des Schweissbolzens 20 beziehungsweise des Untergrunds 30, so dass der Schweissbolzen 20 stoffschlüssig mit dem Untergrund 30 verbunden ist. Um die Gasleitung 72 mit Gas aus dem Gasbehälter 70 zu spülen, wird das Ventil der Gasdurchfluss-Regeleinrichtung 75 während eines vorbestimmten Zeitraums geöffnet, und der Schweissbolzen 20 an den Untergrund 30 geschweisst, während der Schweissbolzen 20 von Gas aus dem Gasbehälter 70 umströmt wird. Das Schweissen des Schweissbolzens 20 an den Untergrund 30 wird dabei eingeleitet, wenn der vorbestimmte Zeitraum verstrichen ist. Alternativ wird einem Benutzer der Schweissvorrichtung 10 die Bereitschaft der Vorrichtung für einen Schweissvorgang signalisiert, wenn der vorbestimmte Zeitraum verstrichen ist. Diese automatische Spülung der Gasleitung wird vorzugsweise immer dann, insbesondere nur dann, durchgeführt, wenn die Schweissvorrichtung 10 eingeschaltet wird und/oder nach längerer Stillstandszeit und/oder nach einem Auswechseln von Teilen der Gasleitung 72.

Die einzelnen Verfahrensschritte werden dabei von der Steuerungseinrichtung 99 gesteuert, welche insbesondere auch die Parameter des Schweissvorgangs, wie beispielsweise eine elektrische Spannung, eine Stromstärke und eine Dauer des Schweissstroms, oder ein Zeitpunkt und eine Geschwindigkeit der Bolzenbewegung, oder eine Bolzenposition, oder einen Gasdurchfluss durch die Gasleitung 72, regelt. Weiterhin wird ein Füllstand des Gasbehälters 70 und die Anzahl von erfolgten Schweissungen detektiert, gespeichert und ausgegeben.

Die Erfindung wurde anhand von Beispielen einer Vorrichtung zur Befestigung eines ersten Gegenstandes an einem zweiten Gegenstand sowie einem Herstellungsverfahren für eine solche Vorrichtung beschrieben. Die Merkmale der beschriebenen Ausführungsformen sind dabei auch beliebig miteinander innerhalb einer einzigen Befestigungsvorrichtung kombinierbar. Es wird darauf hingewiesen, dass die erfindungsgemässe Vorrichtung auch für andere Zwecke geeignet ist.

## Patentansprüche

1. Vorrichtung (10) zum Schweissen eines Schweissbolzens (20) an einen Untergrund (30), mit einer Schweisspistole (40,240), welche ein Gehäuse (51,242) sowie einen Bolzenhalter (44) für den Schweissbolzen (20) umfasst, mit einem Gasbehälter (70,270), und mit einer Gasleitung (72) zur Leitung von Gas aus dem Gasbehälter (70) zu dem Bolzenhalter (44), **dadurch gekennzeichnet, dass** der Gasbehälter (70,270) von der Schweisspistole (40,240) getragen ist.

2. Vorrichtung nach Anspruch 1, wobei die Gasleitung (72) von der Schweisspistole (40,240) getragen ist.

3. Vorrichtung nach Anspruch 2, wobei die Gasleitung (72) insbesondere vollständig in dem Gehäuse (51,242) angeordnet ist.

4. Vorrichtung nach einem Ansprüche 2 bis 3, wobei die Schweisspistole (40,240) eine Gasbehälteraufnahme (73,273) zur Aufnahme des Gasbehälters (70,270) aufweist.

5. Vorrichtung nach Anspruch 4, wobei die Gasleitung (72) ein an der Gasbehälteraufnahme (73, 273) angeordnetes Gasanschlusselement (74) aufweist.

6. Vorrichtung nach einem der vorhergehenden Ansprüche, weiterhin aufweisend eine Gasdurchfluss-Regeleinrichtung (75) für eine Regelung eines Gasdurchflusses durch die Gasleitung (72).

7. Vorrichtung nach Anspruch 6, wobei die Gasdurchfluss-Regeleinrichtung (75) insbesondere vollständig in dem Gehäuse (51,242) angeordnet ist.

8. Vorrichtung nach einem der vorhergehenden Ansprüche, weiterhin aufweisend ein Schweissgerät (50), ein erstes elektrisches Kabel (61) zur Leitung von Schweissstrom von dem Schweissgerät (50) zu der Schweisspistole (40,240) und ein zweites elektrisches (62) zur Leitung des Schweissstroms von dem Untergrund (30) zu dem Schweissgerät (50).

9. Vorrichtung nach einem der vorhergehenden Ansprüche, weiterhin aufweisend eine Füllstands-Detektionseinrichtung (76) für den Gasbehälter (70,270), welche von der Schweisspistole (40,240) getragen ist.

10. Vorrichtung nach Anspruch 9, wobei die Füllstands-Detektionseinrichtung (76) einen Drucksensor zur Messung des Innendrucks des Gasbehälters (70,270) umfasst.

11. Vorrichtung nach einem der Ansprüche 9 bis 10, wobei die Füllstands-Detektionseinrichtung (76) eine Datenverarbeitungseinrichtung umfasst, welche die Anzahl von erfolgten Schweissungen detektiert.

12. Vorrichtung nach einem der Ansprüche 9 bis 11, wobei die Füllstands-Detektionseinrichtung (76) ein Speichermedium, welches an dem Gasbehälter (70,270) angebracht ist, und eine Datenverarbeitungseinrichtung umfasst, welche von der Schweisspistole (40,240) getragen und dafür geeignet ist, Informationen über einen Füllstand des Gasbehälters (70,270) auf dem Speichermedium abzuspeichern oder von dem Speicher auszulesen.

13. Vorrichtung nach einem der Ansprüche 9 bis 12, wobei die Füllstands-Detektionseinrichtung (76) eine Anzeigeeinheit umfasst, welche einen von der Füllstands-Detektionseinrichtung (76) detektierten Füllstand des Gasbehälters (70,270) anzeigt.

## Claims

1. Apparatus (10) for welding a welding stud (20) to a substrate (30), having a welding gun (40, 240) which comprises a housing (51, 242) and a stud holder (44) for the welding stud (20), having a gas container (70, 270) and having a gas line (72) for conducting gas from the gas container (70) to the stud holder (44), **characterized in that** the gas container (70, 270) is supported by the welding gun (40, 240).

2. Apparatus according to Claim 1, wherein the gas line (72) is supported by the welding gun (40, 240).

3. Apparatus according to Claim 2, wherein the gas line (72) is arranged, in particular fully, in the housing (51, 242).

4. Apparatus according to either of Claims 2 and 3, wherein the welding gun (40, 240) has a gas container receptacle (73, 273) for receiving the gas container (70, 270).

5. Apparatus according to Claim 4, wherein the gas line (72) has a gas connection element (74) which is arranged on the gas container receptacle (73, 273).

6. Apparatus according to one of the preceding claims, further having a gas throughflow control device (75) for controlling a flow of gas through the gas line (72).

7. Apparatus according to Claim 6, wherein the gas throughflow control device (75) is arranged, in particular fully, in the housing (51, 242).

8. Apparatus according to one of the preceding claims, further having a welding device (50), a first electric cable (61) for conducting welding current from the welding device (50) to the welding gun (40, 240) and a second electric (62) for conducting the welding current from the substrate (30) to the welding device (50).

9. Apparatus according to one of the preceding claims, further having a filling level detection device (76) for the gas container (70, 270), said filling level detection device being supported by the welding gun (40, 240).

10. Apparatus according to Claim 9, wherein the filling level detection device (76) comprises a pressure sensor for measuring the internal pressure of the gas container (70, 270).

11. Apparatus according to either of Claims 9 and 10, wherein the filling level detection device (76) comprises a data processing device which detects the number of welding operations performed.

12. Apparatus according to one of Claims 9 to 11, wherein the filling level detection device (76) comprises a storage medium, which is attached to the gas container (70, 270), and a data processing device, which is supported by the welding gun (40, 240) and is suitable for storing information about a filling level of the gas container (70, 270) in the storage medium or reading said information from the store.

13. Apparatus according to one of Claims 9 to 12, wherein the filling level detection device (76) comprises a display unit which displays a filling level of the gas container (70, 270) that is detected by the filling level detection device (76).

## Revendications

1. Dispositif (10) de soudage d'un goujon à souder (20) sur un substrat (30), ledit dispositif comprenant un pistolet à souder (40, 240) qui comprend un boîtier (51, 242) et un support de goujon (44) destiné au goujon à souder (20), un réservoir de gaz (70, 270), et une conduite de gaz (72) destinée à acheminer du gaz du réservoir de gaz (70) au support de goujon (44), **caractérisé en ce que** le réservoir de gaz (70, 270) est porté par le pistolet à souder (40, 240).

2. Dispositif selon la revendication 1, la conduite de gaz (72) étant portée par le pistolet à souder (40, 240).

3. Dispositif selon la revendication 2, la conduite de gaz (72) étant notamment disposée entièrement dans le boîtier (51, 242).

4. Dispositif selon l'une des revendications 2 à 3, le pistolet à souder (40, 240) comportant un logement de réservoir de gaz (73, 273) destiné à loger le réservoir de gaz (70, 270).

5. Dispositif selon la revendication 4, la conduite de gaz (72) comportant un élément de raccordement de gaz (74) disposé au niveau du logement de réservoir de gaz (73, 273).

6. Dispositif selon l'une des revendications précédentes, comportant en outre un moyen de régulation de débit de gaz (75) destiné à réguler un débit de gaz à travers la conduite de gaz (72).

7. Dispositif selon la revendication 6, le moyen de régulation de débit de gaz (75) étant notamment disposé entièrement dans le boîtier (51, 242).

8. Dispositif selon l'une des revendications précédentes, comportant en outre un appareil de soudage (50), un premier câble électrique (61) destiné à conduire le courant de soudage de l'appareil de soudage (50) au pistolet à souder (40, 240) et un deuxième électrique (62) destiné à conduire le courant de soudage du substrat (30) à l'appareil de soudage (50).

9. Dispositif selon l'une des revendications précédentes, comportant en outre un moyen de détection de niveau de remplissage (76) du réservoir de gaz (70, 270), qui est porté par le pistolet à souder (40, 240).

10. Dispositif selon la revendication 9, le moyen de détection de niveau de remplissage (76) comprenant un capteur de pression destiné à mesurer la pression interne du réservoir de gaz (70, 270).

11. Dispositif selon l'une des revendications 9 à 10, le moyen de détection de niveau de remplissage (76) comprenant un moyen de traitement de données qui détecte le nombre de soudures effectuées.

12. Dispositif selon l'une des revendications 9 à 11, le moyen de détection de niveau de remplissage (76) comprenant un support de mémorisation, qui est fixé au réservoir de gaz (70, 270), et un moyen de traitement de données qui est porté par le pistolet à souder (40, 240) et qui est adapté pour mémoriser des informations relatives à un niveau de remplissage du réservoir de gaz (70, 270) sur le support de mémorisation ou pour les lire dans le support de mémorisation.

13. Dispositif selon l'une des revendications 9 à 12, le moyen de détection de niveau de remplissage (76) comprenant une unité de présentation qui présente un niveau de remplissage du réservoir de gaz (70, 270) détecté par le moyen de détection de niveau de remplissage (76).
